# EUROPÄISCHE PATENTSCHRIFT

(11) **EP 1 272 078 B1**
(45) Veröffentlichungstag und Bekanntmachung des Hinweises auf die Patenterteilung: **08.08.2007**
(21) Anmeldenummer: 01921285.1
(22) Anmeldetag: 26.02.2001
(51) Int. Cl.: A47J 43/07, A47J 43/08

(54) **KÜCHENMASCHINE**
KITCHEN MACHINE
ROBOT DE CUISINE

(30) Priorität: 31.03.2000 DE 10016290
(43) Veröffentlichungstag der Anmeldung: 08.01.2003
(73) Patentinhaber: BSH Bosch und Siemens Hausgeräte GmbH, 81739 München (DE)
(72) Erfinder: ZIBRET, Igor, 3327 Smartno ob Paki (SI); PAVLOVIC, Henrik, 3333 Ljubno ob Savinji (SI); PESEC, Jurij, 3301 Petrovce (SI)
(86) Internationale Anmeldenummer: PCT/EP2001/002180
(87) Internationale Veröffentlichungsnummer: WO 2001/074218

(56) Entgegenhaltungen:
- DE-A- 4 142 074
- DE-C- 4 126 721
- DE-U- 7 902 965

## Beschreibung

Die Erfindung betrifft eine Küchenmaschine, die mit einem elektromotorischen Antrieb versehen ist, mit dem verschiedenartige auf das Gerätegehäuse aufsetzbare Werkzeuge kuppelbar sind, welches Küchenmaschine ferner ein in zwei Richtungen betätigbares Schaltelement aufweist.

Eine auf dem Markt befindliche Küchenmaschine weist einen durch Verdrehen betätigbaren Schalter auf. Dieser Schalter ist in der einen Verdrehrichtung als Momentanschalter ausgebildet, d.h. der Schalter verbleibt in dieser Verdrehrichtung nur solange in seiner _{"}Ein"-Stellung, wie er von Hand in dieser Stellung gehalten wird. Beim Loslassen wird dieser Schalter durch Federkraft in seine _{"}Aus"-Stellung zurückgestellt. In der anderen Verdrehrichtung kann der Schalter nacheinander in verschiedenen Schaltstufen verstellt werden, in denen er jeweils bis zu einer weiteren Verstellung von Hand verharrt. Das Ausschalten des Schalters muss somit von Hand erfolgen. Bei der bekannten Küchenmaschine kann der Schalter unabhängig von der Art des jeweils an den motorischen Antrieb der Küchenmaschine angekoppelten Werkzeuges in der einen oder anderen Richtung verdreht werden, d.h. jedes Werkzeug kann somit entweder im Momentan- oder Dauerbetrieb benutzt werden.

Es gibt bei Küchenmaschinen Werkzeuge, mit denen Arbeiten ausgeführt werden, für deren Durchführung bevorzugt nur eine der möglichen Betriebsarten in Frage kommt. So ist es beispielsweise bei der Durchführung von Zerkleinerungsarbeiten nicht sehr vorteilhaft, wenn diese im Dauerbetrieb ausgeführt würden. Hier ist eine Durchführung im Momentanbetrieb wesentlich günstiger.

Eine Küchenmaschine nach dem Oberbegriff des unabhängigen Anspruchs 1 ist in DE-U-7 902 965 offenbart.

Der Erfindung liegt die Aufgabe zugrunde, ein Haushaltsgerät der eingangs beschriebenen Art so auszubilden, dass in Abhängigkeit von dem jeweils an das Haushaltsgerät angekoppelten Werkzeug nur eine bestimmte Betriebsart eingestellt werden kann.

Die Lösung der gestellten Aufgabe gelingt nach der Erfindung durch die Merkmale des unabhängigen Anspruchs 1.

Vorteilhafte Ausbildungen der Erfindung sind in den abhängigen Ansprüchen enthalten.

Anhand eines in der Zeichnung dargestellten Ausführungsbeispieles wird die Erfindung nachfolgend noch näher erläutert.

Es zeigen:
- Fig. 1: eine an einer Küchenmaschine vorgesehene Sperreinrichtung in ihrer Sperrstellung und
- Fig. 2: die gleiche Sperreinrichtung in ihrer nicht gesperrten Stellung.

Mit 1 ist ein am Gehäuse 2 eines Haushaltsgerätes, z.B. einer Küchenmaschine, befestigter Tragrahmen bezeichnet. In einer Lageröffnung 3 des Tragrahmens 1 ist eine Kulissenscheibe 4 drehbar angeordnet. Die Kulissenscheibe 4 weist ihrerseits eine Aufnahmeöffnung 5 für einen Schaltknebel auf. Ein solcher, in der Zeichnung nicht dargestellter Schaltknebel kann mittels Rastzungen an am Innenumfang der Aufnahmeöffnung 5 vorgesehener Rasteinschnitte 18 mit der Kulissenscheibe 4 verrastet werden. Damit ist die Kulissenscheibe 4 drehfest mit dem Schaltknebel verbunden und wird bei einem Verdrehen des Schaltknebels entsprechend mit verstellt.

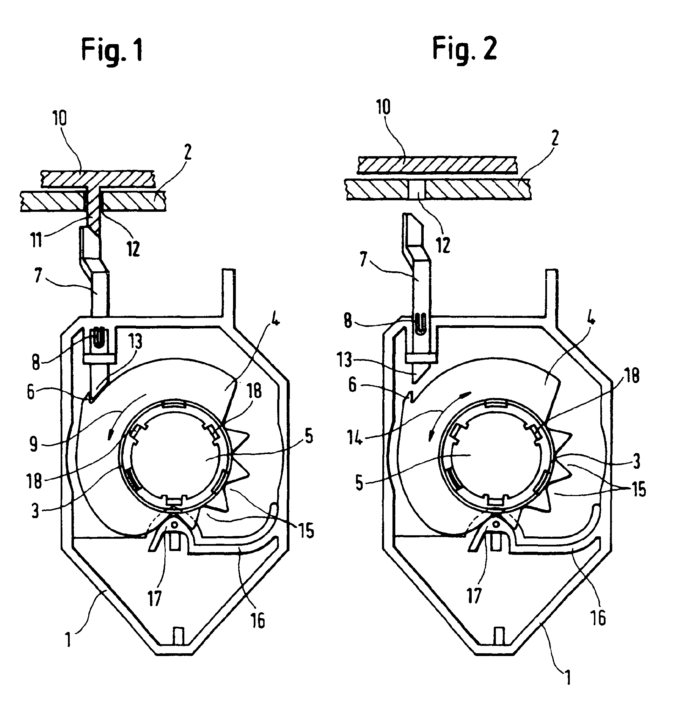

Am Außenumfang der Kulissenscheibe 4 ist eine nach radial außen vorspringende Sperrzunge 6 angeformt. Dieser Sperrzunge 6 ist als Gegensperrelement ein verschiebbar an dem Tragrahmen 1 angeordneter Stößel 7 zugeordnet. Durch ein Feder- oder Gummielement 8 wird der Stößel 7 in seiner Ruhelage gehalten, in der er außer Eingriff mit der Sperrzunge 6 ist. Ist der Stößel 7 dagegen mit der Sperrzunge 6 in Eingriff (siehe Fig. 1), kann die Kulissenscheibe 4 nur in der durch einen Pfeil 9 gekennzeichneten Richtung verdreht werden. Damit kann also auch der an der Kulissenscheibe 4 angekoppelte Schaltknebel, welcher mittels einer an ihm vorgesehenen Schaltachse mit einem Schaltelement in Antriebsverbindung steht, nur in dieser Richtung verdreht werden. Das Schaltelement kann in dieser Verdrehrichtung beispielsweise als Momentanschalter ausgebildet sein.

Ein auf das Gehäuse 2 der Küchenmaschine aufgesetztes Werkzeug weist an seinem Bodenteil 10 einen Betätigungsfinger 11 auf, der beim Aufsetzen des Werkzeuges auf das Gehäuse 2 durch eine an der Gehäusewand vorgesehene Durchstecköffnung 12 hindurchgreift und den Stößel 7 gegen die Kraft des Feder- oder Gummielementes 8 nach unten gegen die Kulissenscheibe 4 drückt. Dabei verhakt sich das freie Ende 13 des Stößels 7 hinter der Sperrzunge 6. Ein Verdrehen der Kulissenscheibe 4 und damit des mit ihr gekoppelten Schaltknebels entgegen der durch den Pfeil 9 angedeuteten Richtung ist somit nicht möglich. Da, wie bereits oben erwähnt, das über den Schaltknebel betätigbare Schaltelement in der durch den Pfeil 9 gekennzeichneten Verdrehrichtung als Momentanschalter ausgebildet ist, kann mit dem aufgesetzten Werkzeug nur im Momentanbetrieb gearbeitet werden.

Ein Werkzeug, das sowohl im Momentan- als auch Dauerbetrieb benutzt werden kann, weist keinen Betätigungsfinger 11 auf. Wird ein solches Werkzeug auf das Gehäuse 2 aufgesetzt, dann kommt es zu keiner Betätigung des Stößels 7 (siehe Fig. 2) und somit auch zu keiner Sperrung einer der Verdrehbewegungen der Kulissenscheibe 4. Diese kann wie durch einen Doppelpfeil 14 in Fig. 2 angedeutet in beiden Richtungen verdreht und damit auch das mit dem an der Kulissenscheibe 4 angeordneten Schaltknebel verbundene Schaltelement. Ein solches Werkzeug kann dann sowohl im Momentan- als auch im Dauerbetrieb betrieben werden.

Am Umfang der Kulissenscheibe 4 sind zusätzlich noch Rastvertiefungen 15 ausgebildet, die mit einer über einen Federarm 16 am Tragrahmen 1 befestigten Rastzunge 17 zusammenwirken. Damit lassen sich für den Dauerbetrieb eines Werkzeuges verschiedene Schaltstufen fest einstellen.

Im Ausführungsbeispiel ist am Umfang der Kulissenscheibe 4 nur eine Sperrzunge 6 dargestellt. Es kann aber auch in dem in Bezug auf die Mittenachse der Aufnahmeöffnung 5 der Sperrzunge 6 gegenüberliegenden Bereich der Kulissenscheibe 4 mindestens eine weitere Sperrzunge vorgesehen sein, der dann ein weiterer Stößel in entsprechender Weise zugeordnet ist. Dieser weitere Stößel kann dann ebenso wie der Stößel 7 über ein entsprechendes Werkzeug betätigt und dadurch für das betreffende Werkzeug ein Momentanbetrieb gesperrt werden.

Weiterhin besteht die Möglichkeit mit der Sperrung der einen Verdrehrichtung der Kulissenscheibe 4 auch eine entsprechende Drehrichtungssperre für das Werkzeug zu verknüpfen, d.h. ein Werkzeug kann dann nur im Rechts- oder Linkslauf betrieben werden. Auch eine Drehzahlbegrenzung kann mittels der beschriebenen Sperreinrichtung erzielt werden, indem werkzeugabhängig beispielsweise im Dauerbetrieb eine Weiterschaltung auf höhere Drehzahlstufen unterbunden wird. Hierzu greift ein an dem betreffenden Werkzeug vorgesehener Betätigungsfinger in ein an entsprechender Stelle der Kulissenscheibe 4 vorgesehenes Sperrelement ein und verhindert dadurch eine Weiterschaltung in die höheren Drehzahlen entsprechenden Schaltstellungen.

## Patentansprüche

1. Küchenmaschine, die mit einem elektromotorischen Antrieb versehen ist, mit dem verschiedenartige auf das Gerätegehäuse aufsetzbare Werkzeuge kuppelbar sind, wobei die Küchenmaschine ferner ein in zwei Richtungen betätigbares Schaltelement aufweist, dessen eine oder andere Schaltrichtung jeweils in Abhängigkeit von dem auf das Gerätegehäuse (2) aufgesetzten Werkzeug (10) gesperrt oder nicht gesperrt ist, **dadurch gekennzeichnet, dass** ein verschiebbar angeordneter und durch Federkraft (8) in einer nicht gesperrten Stellung in Ruhelage gehaltener Stößel (7) als ein Gegensperrelement vorgesehen ist, der durch einen an dem betreffenden Werkzeug vorgesehenen Betätigungsfinger (11) beim Aufsetzen des Werkzeuges auf das Gerätegehäuse (2) in eine Sperrstellung verstellt ist.

2. Küchenmaschine nach Anspruch 1, **dadurch gekennzeichnet, dass** am Umfang eines mit dem in zwei Drehrichtungen betätigbaren Schaltelement drehfest gekoppelten Teiles (4) mindestens ein Sperrelement (6) für die eine Drehrichtung des Schaltelementes vorgesehen ist, mit dem das mit dem Werkzeug gekoppelte Gegensperrelement (7) in Eingriff bringbar ist.

3. Küchenmaschine nach Anspruch 2, **dadurch gekennzeichnet, dass** mit dem Schaltelement einer Kulissenscheibe (4) drehfest verbunden ist, an deren Außenumfang eine nach radial außen abstehende Sperrzunge (6) vorgesehen ist, in deren Verstellweg als Gegensperrelement der in Abhängigkeit vom jeweils aufgesetzten Werkzeug (10) betätigbarer Stößel (7) ragt.

4. Küchenmaschine nach einem der Ansprüche 2, 3 **dadurch gekennzeichnet, dass** ein weiteres Sperrelement für die andere Schaltrichtung des Schaltelementes vorgesehen ist.

5. Küchenmaschine nach einem der vorhergehenden Ansprüche, **dadurch gekennzeichnet, dass** das Schaltelement zumindest in seiner einen Schaltrichtung als Momentanschalter ausgebildet ist.

6. Küchenmaschine nach Anspruch 3, **dadurch gekennzeichnet, dass** am Umfang der Kulissenscheibe (4) zumindest für die eine Schaltrichtung des Schaltelementes Rastvertiefungen (15) vorgesehen sind, in die eine gehäusefest angeordnete Rastzunge (17) eingreift.

## Claims

1. Kitchen machine provided with an electric-motorised drive with which various tools able to be placed on the apparatus housing can be coupled, wherein the kitchen machine further comprises a switching element which is actuable in two directions and one or the other switching direction of which is respectively blocked or unblocked depending on the tool (10) placed on the apparatus housing (2), **characterised in that** a displaceably arranged plunger (7) held by spring force (8) in an unblocked setting in rest position is provided as counter-blocking element, which is adjusted by an actuating finger (11), which is provided at the respective tool, into a blocking setting when the tool is placed on the apparatus housing (2).

2. Kitchen machine according to claim 1, **characterised in that** at least one blocking element (6), with which the counter-blocking element (7) coupled with the tool can be brought into engagement, for the one rotational direction of the switching element is provided at the circumference of a part (4) coupled in rotationally fixed manner with the switching element actuable in two rotational directions.

3. Kitchen machine according to claim 2, **characterised in that** a gate guide disc (4) is connected in rotationally fixed manner with the switching element, at the outer circumference of which disc there is provided a radially outwardly protruding blocking tongue (6) into the adjustment path of which projects - as counter-blocking element - the plunger (7) actuable in dependence on the respective tool (10) in place.

4. Kitchen machine according to one of claims 2 and 3, **characterised in that** a further blocking element is provided for the other switching direction of the switching element.

5. Kitchen machine according to one of the preceding claims, **characterised in that** the switching element is constructed at least in its one switching direction as a rapid break switch.

6. Kitchen machine according to claim 3, **characterised in that** detent depressions (15), in which a detent tongue (17) arranged to be fixed relative to the housing engages, are provided at least for the one switching direction of the switching element.

## Revendications

1. Robot ménager, qui est doté d'un entraînement par moteur électrique, avec lequel différents outils pouvant être posés sur le carter d'appareil peuvent être couplés, le robot ménager présentant également un élément de commande pouvant être actionné dans deux sens de commande, dont l'un ou l'autre est bloqué ou n'est pas bloqué respectivement en fonction de l'outil (10) posé sur le carter d'appareil (2), **caractérisé en ce qu'**un coulisseau (7) disposé de façon coulissante et maintenue en position de repos par la force du ressort (8) dans une position non bloquée est prévu comme élément de contre-blocage, qui est déplacé par un doigt d'actionnement (11) prévu sur l'outil concerné lors de la pose de l'outil sur le carter d'appareil (2) dans une position de blocage.

2. Robot ménager selon la revendication 1, **caractérisé en ce que** sur le pourtour d'une partie (4) couplée de façon solidaire en rotation avec l'élément de commande actionné dans deux sens de rotation est prévu au moins un élément de blocage (6) pour un sens de rotation de l'élément de commande, avec lequel l'élément de contre-blocage (7) couplé avec l'outil peut être amené en prise.

3. Robot ménager selon la revendication 2, **caractérisé en ce que** à l'élément de commande est relié de façon solidaire en rotation un disque à coulisse (4), sur le pourtour extérieur duquel est prévue une lame de blocage (6) dépassant dans le sens radial à l'extérieur, dans la course de déplacement de laquelle dépasse en tant qu'élément de contre-blocage le coulisseau (7) pouvant être actionné en fonction de l'outil (10) posé respectivement dessus.

4. Robot ménager selon l'une quelconque des revendications 2, 3, **caractérisé en ce qu'**un autre élément de blocage est prévu pour l'autre sens de commande de l'élément de commande.

5. Robot ménager selon l'une quelconque des revendications précédentes, **caractérisé en ce que** l'élément de commande est conçu comme commutateur instantané au moins dans l'un de ses sens de commande.

6. Robot ménager selon la revendication 3, **caractérisé en ce que** sur le pourtour du disque à coulisse (4) sont prévus au moins pour un sens de commande de l'élément de commande des cavités d'encliquetage (15) dans lesquelles s'engage une lame d'encliquetage (17) disposée de façon solidaire du boîtier.
